# EUROPÄISCHE PATENTSCHRIFT

(11) **EP 0 466 945 B1**
(45) Veröffentlichungstag und Bekanntmachung des Hinweises auf die Patenterteilung: **19.05.1993**
(21) Anmeldenummer: 90105204.3
(22) Anmeldetag: 20.03.1990
(51) Int. Cl.: A01K 31/06, A01K 1/03

(54) **Erweiterbarer Käfig**
Expandable cage
Cage extensible

(43) Veröffentlichungstag der Anmeldung: 22.01.1992
(73) Patentinhaber: Heidemann, Dietmar, D-23881 Koberg (DE)
(72) Erfinder: Heidemann, Dietmar, D-23881 Koberg (DE)

(56) Entgegenhaltungen:
- DE-A- 2 941 689
- DE-U- 8 715 888
- FR-A- 2 342 652
- NL-A- 7 415 353

## Beschreibung

Die Erfindung bezieht sich auf einen Käfig zum Halten und Züchten von Tieren, insbesondere von Vögeln, bestehend aus Moduln, wobei die Höhe bzw. die Breite des Käfigs durch Hinzufügen oder Entfernen von Moduln veränderbar ist und wobei die Moduln entfernbare Absperrelemente aufweisen.
Tiere, insbesondere Vögel, die sich in den Käfigen aufhalten, die auch ohne Käfigraumöffnung nach außen zu erweitern sind, brauchen ihren Käfig bei diesen Erweiterungen nicht zu verlassen.

Es ist ein Käfig gemäß dem Oberbegriff des Patentanspruchs 1 bekannt, (DE-A-29 41 689) bei dem die Erweiterung des Käfigs durch gleichartige,entfernbare Käfige, bei geöffnetem und bei nach außen geschlossenem Käfigraum durchzuführen ist. Eine vertikale Erweiterung ist nur bei nach außen geöffnetem Käfigraum an der Oberseite durchzuführen. Die Unterseite des Käfigs ist fest abgeschlossen.
In horizontaler Richtung ist eine Erweiterung durch einschieb- -bare Außenwände bei nach außen geschlossenem Käfigraum möglich. Der Aufbau und die Erweiterung dieses Käfigs ist durch die Verwendung unterschiedlicher Kupplungsteile und loser Elemente sowie durch die Art der Montage sehr umständlich. Die Reinigung, ist insbesondere durch den festen Bodenabschluß, nicht einfach.

Hier will die Erfindung Abhilfe schaffen. Die Erfindung, wie sie in den Ansprüchen gekennzeichnet ist, löst die Aufgabe einen Käfig zum Halten und Züchten von Tieren, insbesondere von Vögeln zu schaffen, bei dem alle Käfigseiten als Wechselseiten auszubilden sind, die variabel, einfach und doppelt, mit Hilfe von entfernbaren Absperrelementen und/oder Mobilwänden durch Parallelabsperrungen und Doppelabsperrungen abzusperren und zu öffnen sind, sodaß der Käfig horizontal und/oder vertikal in modularer Bauweise mit gleichartigen Käfigen zu erweitern und durch Absperrelemente in der Funktion und der Gestaltung zu verändern ist, wobei Käfigräume, in denen sich Tiere, insbesondere Vögel aufhalten, nicht nach außen geöffnet werden.

Die durch die Erfindung erreichten Vorteile sind im wesentlichen darin zu sehen, daß eine Käfigerweiterung und Käfigveränderung an allen Wechselseiten durch Doppelabsperrungen und Parallelabsperrungen durchzuführen ist, sodaß eine besonders tierfreundliche Erweiterung bzw. Veränderung des Käfigs, bzw. eine Umsetzung der Tiere, insbesondere Vögel aus einem Käfig in einen anderen Käfig, ohne Jagd- und Einfangstreß und ohne Verletzungsgefahr durch einfache, technische Maßnahmen möglich ist.
Der modulare Aufbau dieses Käfigs ist sehr einfach. Der Käfig, bzw. der Modul ist durch ein Rahmengerüst zu bilden, dessen offene, rahmenartig abgegrenzte Wechselseiten durch entfernbare Absperrelemente und/oder Mobilwände abzusperren sind. Die raumförmigen Moduln sind insbesondere würfel- oder quaderartig aber auch z.B. sechs- oder mehreckig auszubilden. Sie werden beim Auf- bzw. Abbau von Modulgruppen aus mehreren über- und/oder nebeneinander gestellten Moduln als kompakte Elemente verwendet. Sehr vorteilhaft ist die Veränderung der Käfiggröße nach dem Rastersystem. Moduln sind an allen Wechselseiten zu abgesperrten Käfigen, durch Absperrelemente mit entsprechenden Funktionen, abzuschließen. So sind Käfigseiten z.B. durch Abdeckungen, Außenwände oder Bodenschalen abzusperren. Da Moduln in/aus Modulgruppen einzusetzen, herauszunehmen oder auszutauschen sind, können Käfigseiten deren Funktion sich durch die Veränderung der Positionen von Moduln verändert haben, durch entsprechende Absperrelmente abgesperrt werden. Ebenso können entsprechend der unterschiedlichen und vielseitigen Bedürfnisse und Anforderungen von Tieren und Menschen, die jeweils geeigneten Absperrelemente, eingesetzt werden.
Eine Doppelabsperrung ist aus einem frontal zu befestigenden Absperrelement und einer, hinter der Innenseite des Absperrelementes, insbesondere von seitwärts einzuschiebenden Mobilwand, zu bilden. In/aus eine/r Doppelabsperrung kann jede der beiden Absperrungen unabhängig voneinander, ohne Öffnung des Käfigraumes nach außen, eingesetzt oder entfernt werden.
Parallelabsperrungen sind dadurch zu bilden, daß in angrenzenden entsprechend gleichen Wechselseiten von gleichartigen Käfigen, Mobilwände horizontal und/oder vertikal, parallel zueinander einzusetzen sind. So ist es möglich, daß Käfige, die durch eine oder mehrere Parallelabsperrung/en miteinander verbunden sind, an den durch Mobilwände abgesperrten Wechselseiten horizontal und/oder vertikal durch Entfernen der Mobilwände ohne Käfigraumöffnung nach außen, zu erweitern sind. Dadurch können Tiere, insbesondere Vögel, unbeschadet in ihrem Käfig bleiben oder in den neugebildeten Käfig eingesetzt werden, bzw. in diesen gelangen. Ebenso ist ein durch eine Modulgruppe gebildeter Käfig, durch Parallelabsperrungen horizontal und/oder vertikal zu trennen, sodaß die gebildeten Käfige eine Käfiggruppe bilden, aus der einzelne, nach außen abgesperrte Käfige, zu entnehmen sind. So Können Tiere, insbesondere Vögel, unbeschadet aus der Käfiggruppe entnommen werden oder ungestört dort bleiben.
Ein Modul der nicht an allen aber mindestens an zwei Seiten mit einer Wechselseite ausgebildet ist, sodaß er horizontal und/oder vertikal zu erweitern ist, bildet einen Hilfsmodul. Eine nicht als Welchselseite ausgebildete Seite kann z.B. unveränderbar abgesperrt oder offen und durch ein Absperrelement nur einfach absperrbar ausgebildet sein. Ein Raumelement ist wie ein Hilfsmodul ausgebildet, wobei es aber nur eine horizontale oder eine vertikale Wechselseite besitzt.
Zur Befestigung von Absperrelementen aber auch zur Stabilisierung von Gerüstrahmen und zur Bildung von Halteöffnungen, in die Mobilwände einzuschieben sind, können Zusatzstreben in Wechselseiten eingesetzt werden. Absperrelemente und Mobilwände sind auch in Teilen in Wechselseiten anzubringen. Außenwände sind z.B. türen- oder klappenartig oder einschiebbar auszubilden. Mobilwände bestehen vorzugsweise aus gitter- oder plattenartigem Material. Kammobilwände mit veränderbaren Kammzahnabständen und/oder -längen, können auch durch gitterartige Absperrungen geschoben werden. Das Einsetzen, Herausnehmen oder Austauschen von Moduln bzw. Käfigen in/aus Modul- bzw. Käfiggruppen erfordert oft auch Positionsveränderungen der angrenzenden Moduln bzw. Käfige, weil sich in diesen Gefügen Moduln bzw. Käfige gegenseitig Halt und Befestigungsmöglichkeiten bieten. Um derartige Positionsveränderungen zu vermeiden, können Halteelemente, die durch Halterahmengerüste zu bilden sind, so ausgebildet werden, daß in ihnen einzelne oder mehrere Moduln bzw. Käfige unabhängig von anderen Moduln bzw. Käfigen, einzusetzen oder zu entfernen sind. Doppel- und Parallelabsperrungen sind auch in Halteelementen durchzuführen.

Durch die erfindungsgemäße Lösung sind die Möglichkeiten zur Erstellung unterschiedlicher Käfige, sowie zu deren Veränderung durch den Einsatz verschiedenartiger Absperrelemente in Verbindung mit beliebigen Erweiterungen, fast unbegrenzt. Diese Lösung ermöglicht außerdem, daß sich Tiere, insbesondere Vögel, ungestört in separaten Käfigen, innerhalb oder außerhalb des ursprünglichen Käfigs aufhalten können, sodaß z.B. die übrigen Moduln und Absperrelemente des ursprünglichen Käfigs, bei nach außen offenem Käfigraum gründlich zu reinigen und der jeweiligen Tierart, bzw. unterschiedlichen Bedürfnissen und Ansprüchen entsprechend, auszustatten sind. So können z.B. biotopartige, ökologische Bereiche geschaffen werden, die den Tieren, insbesondere Vögeln, artgerechte Lebensbedingungen im Sinne des Naturschutzes und des neuen Umweltbewußtseins, bieten.

Im folgenden wird die Erfindung anhand von Zeichnungen, die lediglich einige Ausführungswege darstellen, näher erläutert. Es zeigt
Figur 1 die Erweiterung eines Moduln durch weitere Moduln
Figur 2-5 verschiedene Käfigbildungen bzw. Käfigveränderungen bei geöffneten Käfigräumen und
Figur 6-9 verschiedene Käfigbildungen bzw. Käfigveränderungen bei abgesperrten Käfigräumen,

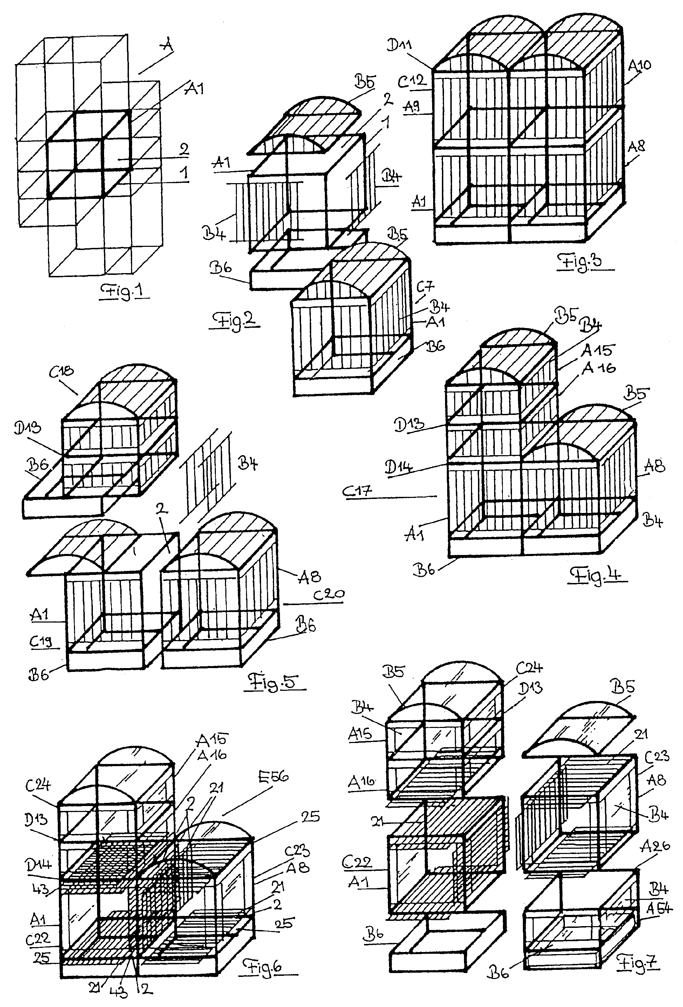

Figur 1o+11 einzelne Möglichkeiten zur Bildung und Anwendung von Zusatzstreben und Außenwänden,
Figur 12 Mobilwände in unterschiedlichen Ausführungen,
Figur 13 Ausführungsbeispiele von Moduln, Hilfsmoduln und Raumelementen sowie
Figur 14 ein Beispiel zur Ausbildung von Halteelementen.
Figur 15+16 Erstellunsvarianten von Käfigen

In den Figuren sind insbesondere erfindungsgemäße Moduln (A) dargestellt, die an allen Seiten uneingeschränkt zur Bildung von variabel verwendbaren Käfigen zu verwenden sind, sowie einige Ausgestaltungsbeispiele.

In Fig. 1 ist ein erfindungsgemäßer Modul (A1) in Skelettbauweise durch ein Rahmengerüst(1) dargestellt, der an seinen allseitig offenen Wechselseiten (2) mit weiteren, auch miteinander an Wechselseiten (2) verbundenen gleichen und nach dem Rastersystem in der Größe bzw, Form veränderten Moduln (A), lösbar verbunden ist.

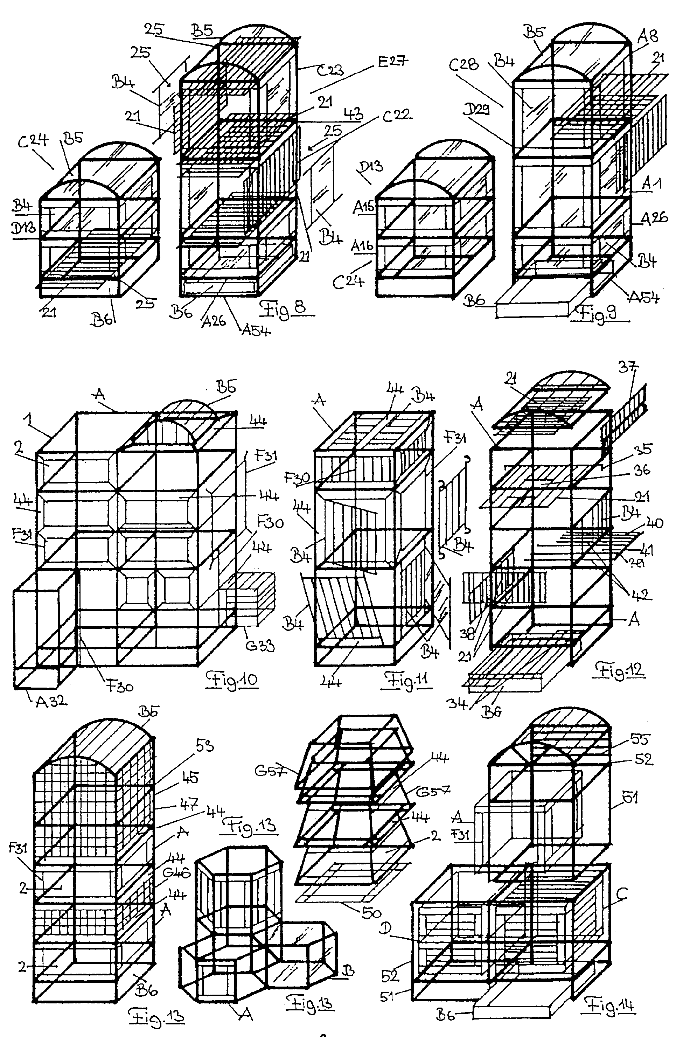

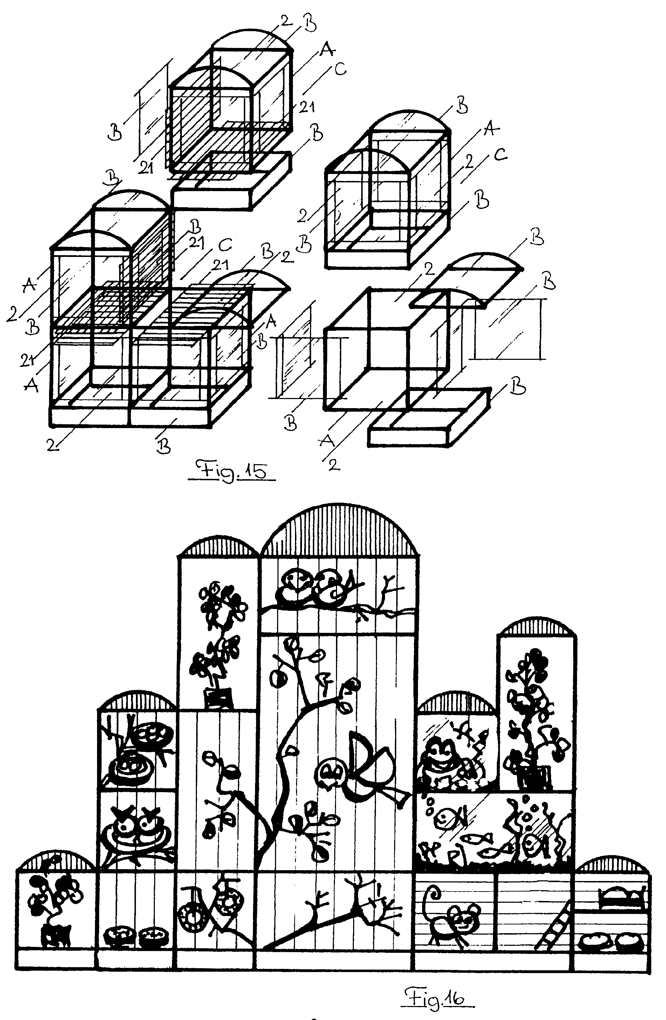

Die Moduln (A ) sind mit dem Modul (A1)derart verbunden, daß horizontale und/oder vertikale sowie zwei-und/oder dreidimensionale Verbindungen gebildet sind. Durch Verbindung des Moduln (A 1) mit Absperrelementen (B), wie Außenwände (B 4) Abdeckungen (B 5) und Bodenschalen (B 6) werden Käfige (C) bzw. der Käfig (C 7) in Fig.2 gebildet. Durch Hinzufügung weiterer Moduln (A 8), (A 9) und (A 1o) zu dem Modul (A 1) wird in Fig.3 die Modulgruppe (D 11) bzw. durch Hinzufügung der entsprechenden Absperrelemente (B) der Käfig (C 12) gebildet. Dieser wird in Figur 4 durch Entfernung der Moduln (A 9) und (A 10) sowie durch Hinzufügen der Modulgruppe (D 13) bzw. durch Austauschen des Modul (A 9) gegen die Modulgruppe (D 13) zur Modulgruppe (D 14) umgebildet, wobei die offenen Wechselseiten (2) der Modulgruppe (D 14) zur Bildung des Käfig (C 17) durch entsprechende Absperrelemente (B) abgesperrt sind. Die Modulgruppe (D 13) wird durch die, nach dem Rastersystem entwickelten Moduln (A 15) und (A 16) gebildet. Der Käfig (C 17) ist in Fig.5 geteilt dargestellt. Aus der Modulgruppe (D13) ist der Käfig (C 18), aus dem Modul (A 1) der Käfig (C 19) und aus dem Modul (A 8) der Käfig (C 2o) zu bilden, indem die entsprechenden Absperrelemente (B) in die entstandenen offenen Wechselseiten(2) eingesetzt werden. Der in Fig.4 gebildete Käfig (C 17) ist in Fig.6 durch horizontal und vertikal in Wechselseiten (2), die sich außen an oder innerhalb der Modulgruppe (D 14) befinden,von den Seiten her eingeschobene Mobilwände (21) in die Käfiggruppe (E 56) umgebildet worden. Die gebildeten separaten, lösbar verbundenen Käfige (C) sind (C 22) aus der Modul (A 1), (C 23) aus dem Modul (A 8) und (C 24) aus der Modulgruppe (D 13). Doppelabsperrungen (25) sind durch Mobilwände (21) zwischen einer einer Abdeckung (B 5) und dem Modul (A 8)sowie zwischen den Moduln (A 1 bzw.A 8) und den Bodenschalen (B 6),sowie Parallelabsperrungen (43) durch Mobilwände (21) zwischen den Moduln (A 1 und A 16) sowie (A 1 und A8) gebildet worden.

Die in Fig. 6 gebildeten Käfige (C 22 bis 24) sowie eine Abdeckung (B5) und eine Bodenschale (B 6) sind in Fig.7 getrennt, wobei der hinzugefügte Modul (A 26), der teilweise mit Außenwänden (B4) abgesperrt ist, mit dem Modul (A 54), in den eine Bodenschale (B 6) eingeschoben ist, verbunden ist. Der Käfig (C24)ist in Fig.8 mit einer Bodenschale(B6) durch eine Doppelabsperrung (25) verbunden. Durch Veränderung der Positionen der Käfige (C 22) und (C 23) und deren vertikale Verbindung mit dem Modul (A 26) wird die Käfiggruppe (E 27) gebidet. Die durch Mobilwände (21) abgesperrten, außen an der Käfigruppe (E 27) befindlichen Wechselseiten (2) sind durch hinzuzufügende , frontal anzubringende Außenwände (B 4), sowie durch eine Abdekkung (B 5) mit Doppelabsperrungen (25) auszubilden. Eine Parallelabsperrung (43) wird durch die Verbindung der Käfige (C 22) und (C 23) gebildet. Durch Herausziehen der Mobilwände (21) aus dem Käfig (C 24) und der Käfiggruppe (E 47) sind die vollständigen, durch Absperrelemente (B) abgesperrten Käfige (C 24) und (C 28) zu bilden, wobei der Käfig (C 28) durch die Modulgruppe (D 29) gebildet wird, die aus den Moduln (A 1), (A 8) und (A 26) besteht,Fig.9. In Fig. 10 sind an Rahmengerüsten (1) in den Wechselseiten (2) von Moduln (A) Zusatzstreben (F) angebracht. Zusatzstreben (F 30) sind zur Aufteilung von Wechselseiten (2) nach dem Rastersystem eingesetzt wobei Zusatzstreben (F 31) im Kantenbereich von Rahmen der Rahmengerüste (1) und/oder im Kantenbereich von Zusatzstreben (F 30) zur Bildung von Schlitzen bzw. Halteöffnungen (44) angebracht sind. Ein Module (A 32) und ein Hilfsmodul (G 33) sind mit Teilen eines Rahmengerüsts (1) und mit Zusatzstreben (F 30) verbunden. Die Abdeckung (B 5) ist mit Zusatzstreben(F 31) verbunden.

In Fig.11 sind in einer Modulgruppe (D) an Rahmengerüsten (1) und Zusatzstreben (F 30) und (F 31) unterschiedlich ausgebildete Außenwände (B 4) angebracht bzw. anzubringen, die türen- oder klappenartig ausgebildet und zu öffnen sind oder einfach zur lösbaren frontalen Befestigung ausgebildet sind. Mobilwände (21) sind in Fig.12 in einer Modulngruppe (D) in unterschiedlichen Ausbildungen und Funktionen gezeigt.Mobilwände (21) und Mobilwandteile (34) sind horizontal oder vertikal dargestellt. Gezeigt sind weiter eine Durchgangsöffnung (36), Führungshilfen (35) und ein durch Mobilteile gebildetes Mobilteilelement (37), sowie eine Kreuzung (38) durch Mobilwände (21). Kamm-Mobilwände (39) sind horizontal oder vertikal durch z.B. gitterartige Außenwände (B4) bzw. Absperrungen ohne Halteöffnungen (44) zur Absperrung von Wechselseiten (2) zu stecken. Eine Kamm-Mobilwand (39) ist mit veränderbaren Kammzähnen (40) zur Veränderung der Kammzahnabstände (41) und der Kammzahnlängen (42) ausgebildet. In einer Modulerweiterungsgruppe (45) Fig.13 sind in Verbindung mit Moduln (A) ein Hilfsmodul (G46) mit zwei Wechselseiten (2) und ein Raumelement (H 47) mit einer Wechselseite (2) sowie ein Absperrelement (B5) dargestellt, wobei das Raumelement (H47) und das Absperrelement (B5) an ihren Offenseiten (53) lösbar miteinander verbunden sind. Sechseckige Moduln (A) sind im Rastersystem ausgebildet und an Wechselseiten (2) verbunden, wobei ein Absperrelement (B) als Aquarium ausgebildet ist. Ineinanderstapelbare konisch geformte Hilfsmoduln (G57) sind in Verbindung mit separaten Halterahmen (50) als Käfig (C) in Verbindung mit Absperrelementen (B) aufzubauen. In Fig.14 sind modulartige, durch Halterahmengerüste (52) gebildete Halteelemente (51) dargestellt, in die teilweise ein Modul (A) sowie eine Bodenschale (B 6) und vollständig ein Modulngruppe (D) sowie ein Käfig(C) eingebracht sind.(55)ist eine Seitenabsperrung. Hilfsmoduln (G) und/oder Raumelemente (H) sind beliebig, separat oder mit Moduln (A) in Halteelemente (51) einzubringen. Halteelemente (51) können auch durch Elemente mit ähnlichen Positionshaltefunktionen ersetzt werden. Alle Verbindungen zwischen Moduln (A), Hilfsmoduln (G) Raumelementen (H), Absperrelementen (B) sowie Mobilwänden (21 und 39) sind grundsätzlich leicht lösbar auszubilden, wobei auch Ausführungen bis zu starren Verbindungen möglich sind. Leicht lösbare Verbindungen sind durch nicht abgebildete Federklammern, Clips, Steckverbindungen, Einrastvorrichtungen oder ähniche Verbindungen in großer Vielfalt auszuführen.

## Patentansprüche

1. Käfig zum Halten und Züchten von Tieren, insbesondere von Vögeln, bestehend aus Moduln (A), wobei die Höhe bzw. die Breite des Käfigs durch Hinzufügen oder Entfernen von Moduln (A) veränderbar ist, und wobei die Moduln (A) entfernbare Absperrelemente (B) aufweisen, dadurch gekennzeichnet,
daß ein Modul (A) aus einem Rahmengerüst (1) und allseitig von sowohl horizontalen als auch vertikalen, offenen Wechselseiten (2) gebildet wird, wobei die Wechselseiten (2) durch entfernbare Mobilwände (21) und/oder entfernbare Absperrelemente (B) abgesperrt werden können und/oder zur Erweiterung des Käfigs (C) mit der Wechselseite (2) eines weiteren Moduls (A) verbunden werden können, so daß die Verbindung der Wechselseiten (2) von Moduln (A) bei eingefügten Mobilwänden (21) unter Bildung einer Parallelabsperrung (43) erfolgen kann und die Mobilwände (21) nachträglich, ohne Öffnung des Käfigraumes nach außen, entfernt werden können.

2. Käfig nach Anspruch 1, dadurch gekennzeichnet, daß eine Mobilwand (21) in Richtung auf den Innenraum des Moduls (A) hinter einem Absperrelement (B) bzw. dessen vorgesehener Einsatz- bzw. Befestigungsposition in eine vorzugsweise schlitzartige Halteöffnung (44) in die abzusperrende Wechselseite (2) einzuschieben ist.

3. Käfig nach Patentanspruch 2, dadurch gekennzeichnet, daß die Mobilwand (21) gitter- oder plattenartig ausgebildet ist.

4. Käfig nach Patentanspruch 2, dadurch gekennzeichnet, daß kammartige Kammobilwände (39) mit vorzugsweise veränderbaren Kammzähnen (40) zur Veränderung der Kammzahnabstände (41) und/oder der Kammzahnlängen (42) durch gitterartige Absperrelemente (B) geschoben sind.

5. Käfig nach einem der Patentansprüche 1 bis 4, dadurch gekennzeichnet, daß Zusatzstreben (F) zur Unterteilung von Wechselseiten (2) an dem Rahmengerüst (1) befestigt und zur Bildung von Halteöffnung (44) vorgesehen sind.

6. Käfig nach einem der Patentansprüche 1 bis 5, dadurch gekennzeichnet, daß der Käfig in ein durch Halterelemente (51) gebildetes Halterahmengerüst (52) eingebracht ist.

7. Käfig nach einem der Patentansprüche 1 bis 6, dadurch gekennzeichnet, daß der Modul (A) mindestens an zwei Seiten mit Wechselseiten (2) ausgebildet ist und damit einen Hilfsmodul (G) bildet.

8. Käfig nach Patentanspruch 7, dadurch gekennzeichnet, daß der Modul (A) mit nur einer Wechselseite (2) ausgebildet ist und damit ein Raumelement (H) bildet.

## Claims

1. Cage for kepping and breeding of animals, especially of birds, consisting of modules (A), whereas the breadth or the height of the cage is to be changed by adding or removing of modules (A) and whereby the modules (A) have removable closing-off elements (B) whereby it is characterized by the fact that a module (A) is built both by a framework (1) and generally is built by horizontally as well vertically open alternative walls, whereby the alternative walls (2) can be barred by removable mobile walls(21) and/or removable barrier elements (B) can be linked of general walls of modules (A) with installed mobile walls (21) by building a parallel barrier (43) can be realized and the mobile walls (21) later can be removed without opening the cage outwardly.

2. Cage according to patent title 1 , characterized by the fact that a mobile wall (21) in direction of the interior of the modules (A) is to be inserted after a barrier element (B) respectively its designed insertion or fixing in a mainly slot like mouting (44) into the general walls to be barred (2).

3. Cage according to patent title 2, characterized by the fact that the mobile wall (21) is built by bars or pierce of woods.

4. Cage according to patent title 2, characterized by the fact that comb like mobile-walls (39) are put in with changeable comb-tooth distances (41) and/or comb-tooth length (42) by grid like barrier-elements (B).

5. Cage according to one of these patent tiltes 1 to 4 , characterized by the fact that additional struts (F) for subdivisung the changeable walls (2) fixed at the framwork (1) and designed for building support openings.

6. Cage according to one of these patent zitles 1 to 5, characterized by the fact that the cage is put in into a support framework by means of support elements (51).

7. Cage according one of these patent titles 1 to 6, characterized by the fact that the module (A) at least at two sides is formed by changeable sides (2) and thus building an auxiliary module (G).

8. Cage according to patent title 7, characterized by the fact that the module (A) is formed only one changeable side (2) and thus building a space element (H).

## Revendications

1. Une cage, constituée à partir de modules (A), et destinée au maintien et à l'élevage d'animaux, en particulier d'oiseaux, dont la hauteur et par conséquent la largeur de la cage est modifiable à travers l'ajout ou le retrait de modules (A) et ou ceux-ci (A) sont des éléments de séparation amovibles (B) est caractérisée par un module (A) , lui-meme construit à partir d'un support de cadre (1), et de côtés interchangeables ouverts (2) sur tous les cotés de la cage, à l'horizontale comme à la verticale; les cotés interchangeables pouvant etre fermés par des cloisons mobiles (21) amovibles et/ou des éléments de fermeture amovibles (B), ceux-ci pouvant eux-memes etre assemblés au coté interchangeable (2) d'un autre module (A) afin d'agrandir la cage, de telle sorte que l'assemblage des cotés interchangeables (2) des modules (A) lors de l'ajout de cloisons mobiles (2) entraine la construction d'une fermeture similaire (43) et que les cloisons mobiles (21) puissent par la suite etre retirées , sans ouverture de la cage vers l'extérieur.

2. La cage, selon le titre de la patence 1, est caractérisée par le fait qu'une cloison mobile (21) puisse etre intercalée sur les cotés intercangeables (2) fermés en direction de la face intérieure du module (A) , derrière un élément de fermeture (B) donc dans la position prévue, c'est à dire de préférence dans la position finale d'une fermeture de maintenance ou une fermeture en forme de fente (44).

3. La cage, selon le titre de la patence 2 est caractérisée par le fait que la cloison mobile (21) soit en forme de grille ou de plaque.

4. La cage, selon le titre de la patence 2 est caractérisée par le fait que les cloisons mobiles crantées (39) soient de préférence avec des dents modifiables (40) afin de pouvoir changer les écarts (41) ou la longueur des dents (42) pouvant ainsi etre intercalées à l'aide d'éléments de fermeture en forme de grille.(B).

5. La cage, selon l'un des titres de la patence 1 jusqu'à 4 est caractérisée par le fait que les supports supplémentaires (F) soient fixés aux supports des cadres afin de pouvoir subdiviser les cotés interchangeables (2) et qu'ils soient ainsi prévus pour la construction de fermetures de maintenance.

6. La cage selon l'un des titres de la patence 1 jusqu'à 5, est caractérisée par le fait que la cage soit installée sur un support tenant le cadre (52) à l'aide d'un élément de support (51).

7. La cage , selon l'un des titres de la patence 1 jusqu'à 6 est carctérisée par le fait que le module (A) soit construit avec des cotés interchangeables (2) sur au moins deux cotés de la cage pour ainsi former un module de soutien (G).

8. La cage, selon le titre de la patence 7 est caractérisée par le fait que le module (A) ne soit composé seulement que d'un coté interchangeable (2) pour ainsi former un volume (H).
